Europäisches Patentamt

European Patent Office

Office européen des brevets

(11) Publication number: **0 070 177**
**B1**

## EUROPEAN PATENT SPECIFICATION

(45) Date of publication of patent specification: **16.10.85**

(51) Int. Cl.⁴: **B 23 K 20/16**

(21) Application number: **82303640.5**

(22) Date of filing: **12.07.82**

(54) Diffusion bonding.

(30) Priority: **13.07.81 JP 109872/81**

(43) Date of publication of application:
**19.01.83 Bulletin 83/03**

(45) Publication of the grant of the patent:
**16.10.85 Bulletin 85/42**

(84) Designated Contracting States:
**DE FR GB**

(56) References cited:
**US-A-3 632 319**
**US-A-3 678 570**
**US-A-4 208 222**

(73) Proprietor: **Hitachi, Ltd.**
**5-1, Marunouchi 1-chome**
**Chiyoda-ku Tokyo 100 (JP)**

(72) Inventor: **Haramaki, Takashi**
**2118-77 Muramatsu Tohkai-mura**
**Naka-gun Ibaraki-ken (JP)**
Inventor: **Funamoto, Takao**
**6-10-35 Ayukawa-cho Hitachi-shi**
**Ibaraki-ken (JP)**
Inventor: **Kokura, Satoshi**
**438-7 Kamesaku-cho Hitachiohta-shi**
**Ibaraki-ken (JP)**
Inventor: **Inagaki, Masahisa**
**1262-21 Ishinazaka-cho Hitachi-shi**
**Ibaraki-ken (JP)**
Inventor: **Jimbou, Ryutaro**
**811-2, Isobe-cho Hitachiohta-shi**
**Ibaraki-ken (JP)**
Inventor: **Sasaki, Toshimi**
**2263-26 Hori-cho Mito-shi**
**Ibaraki-ken (JP)**
Inventor: **Nagayama, Kousei**
**803 Funaishikawa Tohkai-mura**
**Naka-gun Ibaraki-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(74) Representative: **Paget, Hugh Charles Edward et al**
**MEWBURN ELLIS & CO. 2/3 Cursitor Street London EC4A 1BQ (GB)**

## Description

This invention relates to a method of diffusion bonding particularly diffusion bonding to a base metal which is a superalloy based on Ni, Co, Fe or Ti.

In this specification we use the term "base metal" to describe one or both of the members being joined by the bonding. It does not refer to the nature of the metal.

Recently, gas turbine blades have been produced by joining together, in a predetermined configuration, structural members consisting of superalloys. The bond of the superalloys, how-· ever, must have the same properties as the superalloy base metals, and no satisfactory bonding method has yet been established. Fusion welding or high temperature brazing using a Ni-based brazing material has generally been employed, but strict limitations exist when applying the fusion welding techniques to turbine structural members and a number of structural elements cannot be subjected to this process because of their complicated shapes. Though brazing offers a number of advantages in comparison with fusion welding, it has very limited application because the brazed joint has relatively low strength and its melting point is low.

Diffusion bonding, which involves movement of atoms between the contacting base metals, is known to have high reliability, but its practice imposes severe requirements which must be satisfied. Thus, the surface roughness of the joint surfaces must be minimized, the joint surfaces must be completely clean and any non-joint interface must be eliminated. To satisfy the last of these requirements, diffusion treatment must be carried out under high pressure contact conditions for an extended period of time.

To facilitate the finishing of the joint surface and to improve the joint strength, there has been proposed a method in which a powdery insert material is arranged between the base metal surfaces to be joined and diffusion bonding is carried out until the insert material has completed reaction with the base metals (US—A—3,632,319). Another method is proposed in which a foil-like insert is placed between the base metals to be joined and diffusion bonding is performed until the insert has completed reaction with the base metals (US—A—3,678,570).

When a foil is used as in insert, two interfaces exist i.e. between the respective base metals and the insert material, and when powder is used as the insert material, an extremely large number of interfaces can be considered to exist. The greater the number of interfaces between the joint surface of the base metals and the reactive metallic insert material, the more severe must be the pre-treatment characteristics of the base metal surfaces and the longer is the time required for diffusion treatment. Incidentally, diffusion treatment is carried out for about 24 hours in order to obtain a joint having substantially the same characteristics as those of the base metals.

US—A—4208222 discloses the provision of an inter-layer alloy by depositing at least two layers of metal, and the alloy is subsequently bonded. This is a two-step process to prepare the superalloy for bonding.

The present invention is primarily directed to the problem of providing a diffusion bonding method for superalloys by which a strong joint is obtained, having preferably substantially the same characteristics as those of the base metals, within a short period of time, which makes it possible to avoid a two-step process for forming the alloy layer.

The present invention proposes forming, in advance of the bonding step, a low melting alloy layer containing one or more additive elements having a diffusion speed higher than the principal constituent element or elements of the super alloy base metal. This alloy is formed on at least one of the joint surfaces of the base metals. Then the joint surfaces are brought into contact and the diffusion treatment is effected. The superalloy is preferably a precipitation hardening type Ni superalloy containing Al and Ti.

Embodiments of the invention will now be described by way of example, with reference to the accompaning drawings, in which:—

Figure 1 is a schematic view showing the condition of the joint at stages in a method embodying the present invention in comparison with a method of the prior art;

Figure 2(A) is a micrograph showing the alloy layer formed in an embodiment of the present invention;

Figure 2(B) is a micrograph showing the metal structure of the joint after diffusion treatment in an embodiment of the present invention; and

Figure 3 is a diagram showing the high temperature tensile strength of joints formed in accordance with the present invention in comparison with joints in accordance with the prior art.

In the present invention, at least one of the base metals is a superalloy based on one or more of Co, Ni, Fe Ti, and the like, having ultrahigh heat-resistance. The low melting alloy layer is formed on at least the surface of the superalloy to be joined. When the low melting alloy is formed on only one of the joint surfaces of the base metals, the interface subjected to diffusion treatment is an interface between the low melting alloy layer and the joint surface of the other base metal. When the low melting alloy layer is formed on both joint surfaces of the base metals, the interface at the time of diffusion treatment is between the low melting alloy layers.

It is essential that the low melting alloy layer has a melting point lower than that of the superalloy base metal and a higher diffusion speed than the principal constituent elements of the base metal. For heat-resistant superalloys based on Co, Ni, Fe and Ti, B and Hf are examples of the additive element in the alloy layer.

Especially when B is used, and the base metal is a Ni-based heat-resistant super-alloy B reacts with Ni as the principal constituent element and forms an eutectic point inside the matrix of the base metal. The Ni-B eutectic point is 1,080°C which is lower than the melting point of the base metal (1,250°C). Hence, diffusion proceeds effectively at a temperature lower than the melting point of the base metal. It is alternatively possible to use Si, P, Mn, Nb, Ta and the like instead of B and Hf in the low melting alloy layer in order to reduce the melting point and to effect surface cleaning of the alloy layer.

The low melting alloy layer can be formed on the joint surface or surfaces of the base metal by, for example, fusing the additive element(s) (which has a higher diffusion speed than the principal constituent element of the superalloy base metal) in the form of powder or foil on the joint surface of the base metal. Laser or plasma radiation is the most practical diffusion method from the aspect of workability. Instead of diffusing the additive element, the alloy layer can be formed on at least one of the joint surfaces of the base metal by ion implantation, CVD, spraying or the like.

Incidentally, when an additive element in the form of powder is used, a preferred method has the steps of dispersing homogeneously the powder in an organic binder, coating the joint surface of the base metal with the dispersion and then fusing the dispersion. There is no particular limitation for the organic binder. For example, a solution prepared by dissolving an acrylic resin in an organic solvent such as ethyl acetate and/or methylethyl ketone can be used.

The thickness of the low melting alloy layer is associated with the tolerance of the surface finish of the base metal. The smaller the thickness, the greater the effect. In practice, however, this thickness is preferably up to 100 μm.

The diffusion treatment is carried out by opposing the joint surfaces of the base metals to each other after the low melting alloy layer is formed on one or both joint surfaces, and then heating the base metals in a non-oxidizing atmosphere. An electric oven held at a reduced pressure of $10^{-3}$ Torr or below can be employed to provide the non-oxidizing atmosphere. The temperature used is within the range from the melting point of the low melting alloy layer to the melting point of the base metal. If the temperature is below the melting point of the low melting alloy layer, diffusion is insufficient, while if this temperature is higher than the melting point of the base metal, the base metal is likely to undergo deformation.

To improve adhesion of the allow layer, it is preferred that a load of up to 3.0 kg/mm², preferably 0.5 kg/mm², is added to the weight of the base metal during the diffusion treatment. Since there is only one interface at the time of joining the base metals and the diffusion time can be short, in the present invention, the diffusion treatment can be sufficiently effective even at low load.

During the diffusion treatment, the alloy layer of low melting point first fuses with the increasing temperature and then mutual diffusion proceeds between the low melting alloy layer and the base metal. When a certain period of time has passed, the alloy layer present prior to joining no longer exists and a metal structure equivalent to the base metal arises.

The time required for this diffusion treatment is shorter than that required in conventional methods using insert materials. The reason for this is assumed to be as follows.

A foil not containing Al and Ti as the separation promoter element is used in the conventional method. When a superalloy based on Ni is used as the base metal, for example, it can be assumed that homogeneous diffusion of Al, Ti and B into Ni would have significant effects on the joint strength. At the diffusion temperature of 1,170°C, the diffusion coefficients of Al and Ti are $3.74 \times 10^{-10}$ cm²/s and $4.26 \times 10^{-10}$ cm²/s, respectively, and are approximately equal to each other. The diffusion coefficient of B is $3.04 \times 10^{-6}$ cm²/s at the diffusion temperature of 1,170°C.

The diffusion state of the joint portion in the case of the use of foil (conventional method) and in the case of the use of an alloy layer (method of the present invention) can be approximately expressed by the following formulae (1) and (2), respectively. Since the diffusion coefficients of Al and Ti are approximately equal to each other, the diffusion conditions for Al and B only are illustrated.

$$C_p = \frac{C_o h_o}{2\sqrt{\pi D t}} \qquad \ldots(B) \ldots (1)$$

$$C_p = C_o \left(1 - \frac{D_o h_o}{2\sqrt{\pi D t}}\right) \qquad \ldots(Al) \ldots (2)$$

$C_o$: initial concentration
$h_o$: film thickness of insert material
$C_p$: temperature at the centre of the joint
D: diffusion coefficient

[with the proviso that $D = D_o \exp\left(-\frac{Q}{RT}\right)$]

Since the present invention does not use an insert material, $h_o \fallingdotseq 0$ in the formula (2), whereas $h_o$ is several μm in the conventional method using an insert material (foil). Accordingly, diffusion of Al or Ti is not necessary in the present invention and the time required for joining is determined solely by the diffusion rate of B which has a high diffusion coefficient.

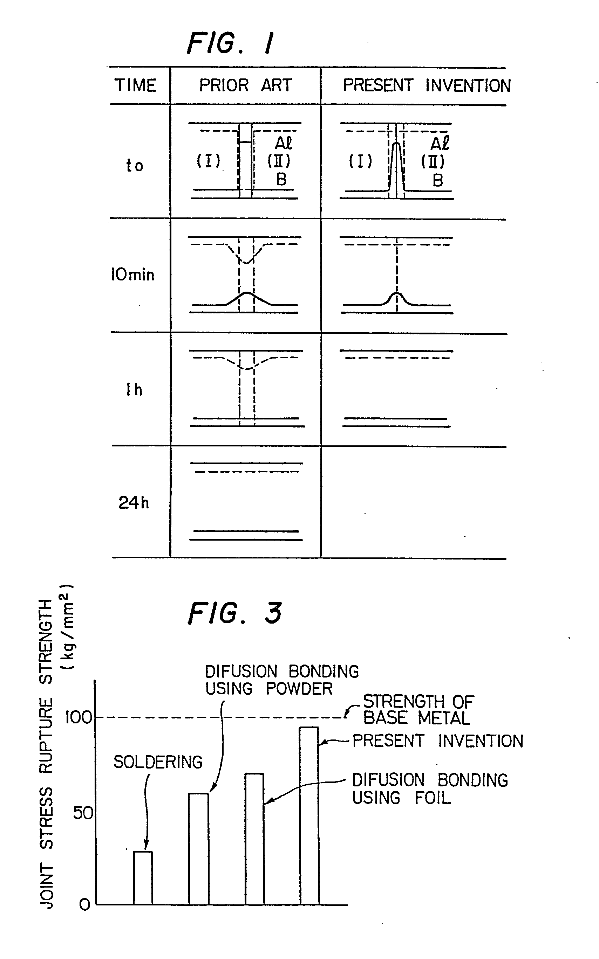

Figure 1 schematically illustrates the results of calculation of the relationship between concentration distribution and time using the formulae (1) and (2). The gap between the joint base metals is taken as 0.05 to 0.1 mm and the diffusion heating temperature is 1,170°C. The B concentration is indicated by a solid line, and the Al concentration

by a broken line. Other lines indicate the boundaries of the base metals I and II and the foil insert or the alloy layer.

It can be seen from Figure 1 that, at time $t_0$, the B concentration at the joint is high and the Al concentration has a low square diffusion state in the conventional method, whereas the concentration gradient of B can be seen in the method of the present invention. When the diffusion treatment has occurred for 10 minutes, B has diffused into the base metal in the conventional method because its diffusion speed is high, while Al in contrast diffuses from the base metal into the intermediate layer. Since homogenization is accomplished only by diffusion of B in the method of the present invention, it is not necessary to take Al diffusion into consideration. After one hour, diffusion is still proceeding in the conventional method, but since diffusion of Al is not complete, the strength of the joint is not fully compatible to that of the base metal. In the method of the present invention, on the other hand, diffusion of B has sufficiently proceeded after one hour and homogenization has been substantially accomplished. Diffusion treatment for at least 24 hours is necessary in the conventional method in order to obtain the joint strength compatible to that of the base metal. Thus, it can be appreciated from Figure 1 that the present invention makes it possible to carry out the diffusion treatment for a far shorter time than in the conventional method.

Example

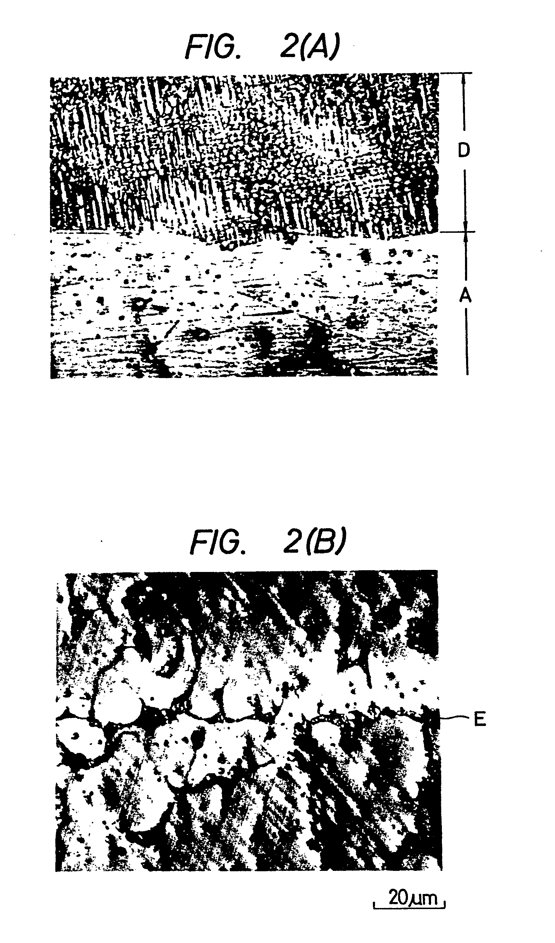

An IN-738LC testpiece for tensile test, i.e. a heat-resistant superalloy, was used as the base metal, and its joint surface was coated with a dispersion prepared by mixing B powder, an acrylic resin and methyl ethyl ketone in a mixing ratio of 1:1:1. A laser beam was radiated onto the surface for several seconds. (Laser radiation conditions were 2 kW $CO_2$ laser output 1.8 kW; scanning speed 0.5 m/min). By this irradiation, an alloy layer D consisting principally of Ni-B was formed as shown in Figure 2(A) on the base metal A to a thickness of about 50 μm. The surfaces of two tensile testpieces having such alloy layers formed thereon were then opposed each other, placed in an electric oven and the pressure was reduced to $5 \times 10^{-5}$ Torr. In this instance, a 0.05 kg/mm$^2$ load was applied to the testpieces in order to improve adhesion at the joint surfaces. The diffusion treating temperature was set at 1,170°C and after this temperature was attained, the testpieces were held at that temperature for one hour and was thereafter cooled. Figure 2(B) shows the metal structure in the proximity of the joint surfaces after the diffusion treatment. It can be seen that no alloy layer exists at the joint surface E and in fact this joint surface can not easily be distinguished. This means that homogenization was sufficiently achieved.

To demonstrate the conventional brazing method, BNi-2 (JIS Z 3625) was employed. The insert material A was a powder composition formed by adding 3% B to components similar to those of IN-738LC, the base metal. The insert material B was a foil composition formed by removing Al and Ti from components similar to those of the IN-738LC base metal but adding 3% B. In each test, two tensile testpieces were heat-treated at 1,170°C for one hour in a non-oxidizing atmosphere, and the results of a high temperature tensile test at 640°C were compared with those obtained with the joint formed according to the present invention under the same test condition (Figure 3).

It can be seen from Figure 3 that with the method of the present invention, the joint has high tensile disruptive strength which is substantially comparable to the strength of the base metal.

Although the above example describes the diffusion bonding method applied to Ni-based alloy, it has been confirmed that, when applied to heat-resistant alloys based on Co, Fe and Ti, the method of the invention can provide a joint having substantially the same characteristics as the base metal. The diffusion bonding method of the present invention can be applied not only to bonding of base metals of the same kind but also to bonding of base metals of different kinds.

To summarize, in the present invention, an alloy layer is formed in advance on the base metal and diffusion bonding is then carried out. As a result, the interface between the joint surfaces can be such that the joint strength comparable to that of the base metal can be obtained with a short diffusion treatment time.

**Claims**

1. A diffusion bonding method of joining two base metals of which at least one is a superalloy based on Ni, Co, Fe or Ti wherein an alloy layer is formed at at least the joint surface of said superalloy and a heat treatment is subsequently performed to effect diffusion bonding of the base metals by means of said alloy layer, the said alloy layer containing an additive element or elements having higher diffusion speed than the principal constituent element of the superalloy and having lower melting point than the superalloy, said additive element(s) undergoing diffusion in said heat treatment so as to bond the base metals together.

2. A diffusion bonding method according to claim 1 wherein said superalloy is a precipitation hardening type Ni superalloy containing Al and Ti.

3. A diffusion bonding method as defined in claim 1 or claim 2 wherein said alloy layer contains B as said additive element.

**Patentansprüche**

1. Diffusionverbindungs-Verfahren zum Zusammenfügen zweier Grundmetalle, von denen mindestens eines eine Superlegierung auf der Basis von Ni, Co, Fe oder Ti ist, wobei mindestens an der Verbindungsoberfläche der Superlegierung eine Legierungsschicht gebildet und anschließend eine Wärmebehandlung durchgeführt wird, um die Diffusionsverbindung der Grundmetalle mittels der Legierungsschicht herbeizuführen, wobei die Legierungsschicht ein oder mehrere Zusatzelemente mit höherer Diffusionsgeschwindigkeit als das Hauptbestandteils-Element der Superlegierung und mit niedrigerem Schmelzpunkt als die Superlegierung enthält, und wobei der bzw. die Zusatzelemente in der Wärmebehandlung diffundieren, so daß die Grundmetalle miteinander verbunden werden.

2. Diffusionsverbindungs-Verfahren nach Anspruch 1, wobei die Superlegierung eine Al und Ti enthaltende Ni-Superlegierung ist, die durch Ausscheidung härtet.

3. Diffusionsverbindungs-Verfahren nach Anspruch 1 oder 2, wobei die Legierungsschicht als Zusatzelemnt B enthält.

**Revendications**

1. Procédé de liaison par diffusion pour réunir deux métaux de base dont l'un au moins est un superalliage à base de Ni, de Co, de Fe ou de Ti, dans lequel une couche d'alliage est formée au moins au niveau de la surface de liaison dudit superalliage, et un traitement thermique est mis en oeuvre ultérieurement pour réaliser la liaison par diffusion des métaux de base au moyen de ladite couche d'alliage, ladite couche d'alliage contenant un deux éléments additifs possédant une vitesse de diffusion supérieure à celle de l'élément constitutif proncipal du superalliage et possédant un point de fusion inférieur à celui du superalliage, le ou lesdits éléments additifs faisant l'objet d'une diffusion sous l'effet dudit traitement thermique de manière à relier ensemble les métaux de base.

2. Procédé de liaison par diffusion selon la revendication 1, selon lequel ledit superalliage est un super alliage à base de Ni du type durcissant par précipitation et contenant du Al et du Ti.

3. Procédé de liaison par diffusion selon la revendication 1 ou 2, selon lequel ladite couche d'alliage contient du B en tant qu'élément additif.

## FIG. 1

| TIME | PRIOR ART | PRESENT INVENTION |
|------|-----------|-------------------|
| to | (I) Al (II) B | (I) Al (II) B |
| 10min | | |
| 1h | | |
| 24h | | |

## FIG. 3

JOINT STRESS RUPTURE STRENGTH ($kg/mm^2$)

DIFUSION BONDING USING POWDER

STRENGTH OF BASE METAL

PRESENT INVENTION

DIFUSION BONDING USING FOIL

SOLDERING

1

## FIG. 2(A)

D

A

## FIG. 2(B)

E

20μm